Europäisches Patentamt

European Patent Office

Office européen des brevets

(11) Veröffentlichungsnummer: **0 463 191 A1**

## EUROPÄISCHE PATENTANMELDUNG

(21) Anmeldenummer: **90111935.4**

(22) Anmeldetag: **23.06.90**

(51) Int. Cl.5: **H04N 1/04**

(43) Veröffentlichungstag der Anmeldung:
**02.01.92 Patentblatt 92/01**

(84) Benannte Vertragsstaaten:
**CH DE FR GB IT LI NL SE**

(71) Anmelder: **ELEKTRO-OPTIK GmbH & Co. K.G.**
**Fördestrasse 35**
**W-2392 Glücksburg(DE)**

(72) Erfinder: **Nitsche, Erhard**
**Hasenheide 40**
**W-2262 Leck(DE)**

(54) **Elektronisches Verfahren zur Bildverbesserung eines Zeilenbildes.**

(57) Es wird ein Verfahren zur Qualitätsverbesserung eines Zeilenbildes beschrieben, das mit einem Detektor und refraktiven oder reflektiven Scanelementen aufgenommen wird. Fertigungstoleranzen der Scanelemente führen dazu, daß jede Zeile zu einem verschiedenen Zeitpunkt beginnt, die Folge ist ein streifiges Zeilenbild. Durch eine geeignete Verzögerungsschaltung, die für jedes Scanelement individuell dimensioniert sein muß, kann das Signal einer jeden Zeile so verzögert werden, daß alle Zeilen einen gemeinsamen Zeit-Nullpunkt besitzen. Die Streifenstruktur des Zeilenbildes ist damit aufgehoben.

Fig. 1

Rank Xerox (UK) Business Services

Die Erfindung betrifft ein Verfahren zur Qualitätsverbesserung eines Zeilenbildes, das mit einem Detektor und refraktiven oder reflektiven Scanelementen aufgenommen wird.

Der vorliegenden Erfindung liegt die Aufgabe zugrunde, den zeitlichen Versatz einer jeden Zeile relativ zueinander aufzuheben. Dieser Versatz ergibt sich durch Fertigungsfehler der refraktiven oder reflektiven Scanelemente. Als Folge erscheint das Zeilenbild streifig und sehr unruhig.

Es ist Stand der Technik den Startzeitpunkt jeder Zeile mittels "pick up" über eine Lichtschranke aus der Position des Scanelementes zu definieren. Mit hinreichender Genauigkeit arbeitet dieses Verfahren aber nur in Verbindung mit einfachen Scanelementen, die mit großer Präzision hergestellt werden können.

Bei komplizierteren Scanelementen führen kleinste Fertigungstoleranzen jedoch dazu, daß jede Zeile zu einem verschiedenen Zeitpunkt beginnt.

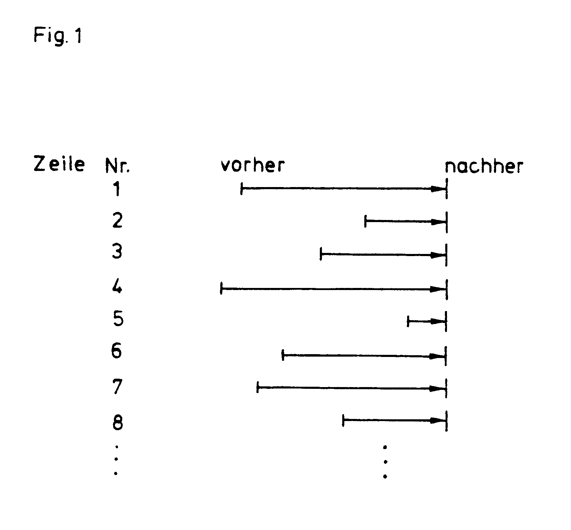

In der Zeichnung 1 ist das schematisch dargestellt. Der Startzeitpunkt läßt sich für jede Zeile experimentell bestimmen. Durch eine geeignete elektronische Verzögerungsschaltung, die für jedes Scanelement individuell dimensioniert sein muß, kann das Signal einer jeden Zeile so verzögert werden, daß alle Zeilen einen gemeinsamen Zeit-Nullpunkt besitzen. Der Effekt ist in Abbildung 1 durch die verschieden langen Pfeile gekennzeichnet.

**Patentansprüche**

1.  Verfahren zur Qualitätsverbesserung eines mittels eines Detektors und refraktiver oder reflektiver Scanelemente aufgenommenen Zeilenbildes, dadurch gekennzeichnet, daß Fertigungstoleranzen der optischen Elemente durch eine elektronische Verzögerungsschaltung ausgeglichen werden.

Fig. 1

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 677 683   (PFERD ET AL.)<br>* Spalte 2, Zeilen 30 - 52 * * Spalte 5, Zeile 19 - Spalte 7, Zeile 14; Figuren 2, 4 *<br>– – – | 1 | H 04 N 1/04 |
| Y | PATENT ABSTRACTS OF JAPAN vol. 7, no. 88 (E-170)(1233) 12 April 1983,<br>& JP-A-58 014662 (HITACHI SEISAKUSHO K.K.) 27 Januar 1983,<br>* das ganze Dokument *<br>– – – – – | 1 | |

**RECHERCHIERTE SACHGEBIETE (Int. Cl.5)**

H 04 N

Der vorliegende Recherchenbericht wurde für alle Patentansprüche erstellt

| Recherchenort | Abschlußdatum der Recherche | Prüfer |
|---|---|---|
| Berlin | 17 Mai 91 | MATERNE A G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

-----------------------------------------------------------------

& : Mitglied der gleichen Patentfamilie, übereinstimmendes Dokument